(19) Europäisches Patentamt

European Patent Office

Office européen des brevets

(11) Veröffentlichungsnummer: **0 505 711 A1**

# (12) EUROPÄISCHE PATENTANMELDUNG

(21) Anmeldenummer: **92102363.6**

(22) Anmeldetag: **13.02.92**

(30) Priorität: **26.03.91 DE 9103677 U**

(43) Veröffentlichungstag der Anmeldung:
**30.09.92 Patentblatt 92/40**

(84) Benannte Vertragsstaaten:
**CH DE FR IT LI**

(51) Int. Cl.⁵: **F16L 37/00, F16L 3/10, F16L 41/02**

(71) Anmelder: **ROBERT BOSCH GMBH**
**Postfach 30 02 20**
**W-7000 Stuttgart 30(DE)**

(72) Erfinder: **Kroener, Werner**
**Peter-Hebel-Weg 22**
**W-8504 Stein(DE)**
Erfinder: **Schmidt, Georg**
**Goethering 72**
**W-8504 Stein(DE)**

(54) **Verbindungselement für Schläuche.**

㉗ Es wird eine Einrichtung (16) zum Sammeln und Weiterleiten von Abluft aus pneumatischen Magnetventilen vorgeschlagen, die bei einfacher und billiger Bauweise vielseitig anwendbar ist. Die Einrichtung (16) weist eine über einen Abluftanschluß befestigte, becherförmige Abdeckkappe (26), deren Schlauchöffnungen (31, 32) zum Boden der Abdeckkappe hin verlaufende Schlitze (33, 34) hat und eine auf die Abdeckkappe (26) aufgesetzte, hutförmige Verschlußkappe (41) auf, deren den Schlauchöffnungen (31, 32) zugeordnete Bohrungen (43, 44, 45) über Einführschlitze (46, 47, 48) zum freien Rand der Verschlußkappe (41) hin offen sind. Die Verschlußkappe (41) wird erst nach dem Einführen der Schlauchenden in die Schlauchöffnungen (31, 32) auf die Abdeckkappe (26) aufgesteckt.

FIG. 2

EP 0 505 711 A1

Stand der Technik

Die Erfindung geht aus von einer Einrichtung zum Sammeln und Weiterleiten von Abluft aus pneumatischen Bauelementen nach der Gattung des Hauptanspruchs.

Es ist schon eine solche Einrichtung zum Sammeln und Weiterleiten von Abluft aus elektromagnetisch betätigten, pneumatischen Ventilen bekannt, bei denen der Rücklaufanschluß jedes einzelnen Pneumatikventils über ein zweites Schlauchleitungssystem mit unterschiedlich gebauten Rohrverschraubungen an einen gemeinsamen Ölabscheider angeschlossen sind. Auf diese Weise kann die in Fertigungseinrichtungen von den häufig schaltenden Pneumatikventilen verbrauchte Abluft so in die Umgebung abgelassen werden, daß einerseits eine Schalldämpfung erreicht wird und andererseits in der Abluft enthaltenes, fein verteiltes Öl zurückgehalten wird. Das hierbei verwendete Schlauchleitungssystem mit Rohrverschraubungen mit T-Stücken und anderen Formelementen baut relativ aufwendig, beansprucht relativ viel Raum und ist zudem teuer. Fernerhin muß die Einrichtung an die jeweiligen Gegebenheiten angepaßt werden und erschwert die Montage bzw. Demontage von Bauelementen in den Fertigungseinrichtungen.

Vorteile der Erfindung

Die erfindungsgemäße Einrichtung zum Sammeln und Weiterleiten von Abluft aus pneumatischen Bauelementen mit den kennzeichnenden Merkmalen des Hauptanspruchs hat demgegenüber den Vorteil, daß sie bei einfacher und billiger Bauweise relativ vielseitig anwendbar ist und dabei die Umweltbelastungen reduziert. Vor allem wird die Schall- und Ölbelastung der Umwelt auf ein Mindestmaß reduziert. Die Einrichtung läßt sich mit billigen Bauelementen realisieren und ist flexibel an die jeweiligen Anwendungsverhältnisse anpaßbar, so daß sie sich für jeden Ventilabstand sowie für Einzelanschlußplatten eignet. Zudem baut sie platzsparend und montagefreundlich.

Durch die in den Unteransprüchen aufgeführten Maßnahmen sind vorteilhafte Weiterbildungen und Verbesserungen der im Hauptanspruch angegebenen Einrichtung möglich. Besonders vorteilhaft sind Ausbildungen nach den Ansprüchen 2 und 3, wodurch die Einrichtung ohne besonderen Aufwand zum Anschließen von einer oder zwei Schlauchleitungen umschaltbar ist. Besonders günstig für eine einfache Schlauchmontage ist es, wenn die Einrichtung nach Anspruch 4 mit innenliegenden Anschlägen ausgebildet wird. Ferner ist es für eine einfache Handhabung der Einrichtung und für deren flexible Justierung besonders günstig, wenn sie gemäß dem Anspruch 7 ausgebildet wird, so daß die Sammelkappe über eine einfache Schnappverbindung am Pneumatikventil befestigbar ist, wobei die Richtung der abgehenden Schläuche durch einfaches Drehen einstellbar ist. Weitere vorteilhafte Ausgestaltungen ergeben sich aus den übrigen Ansprüchen, der Beschreibung und der Zeichnung.

Zeichnung

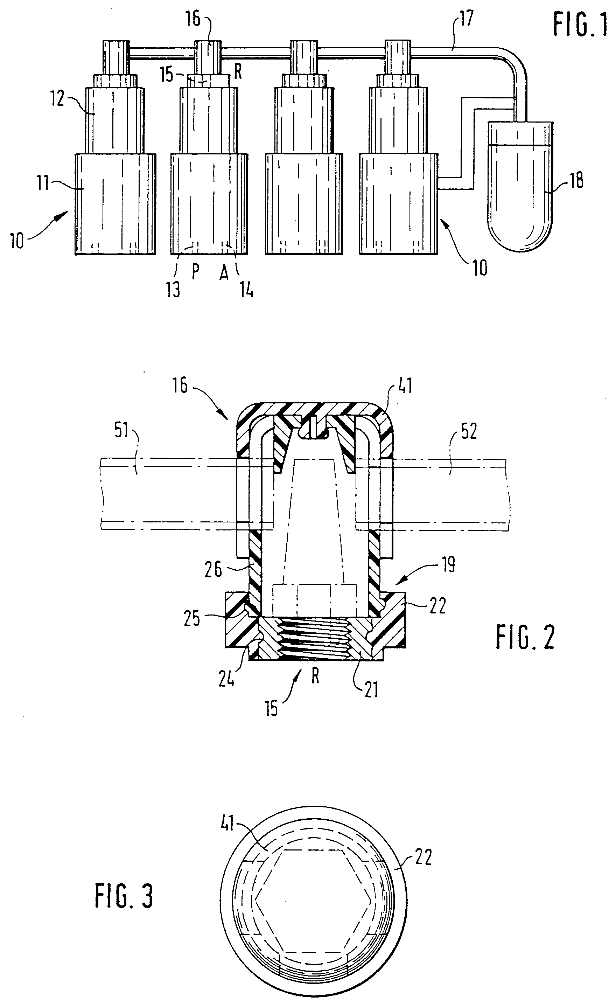

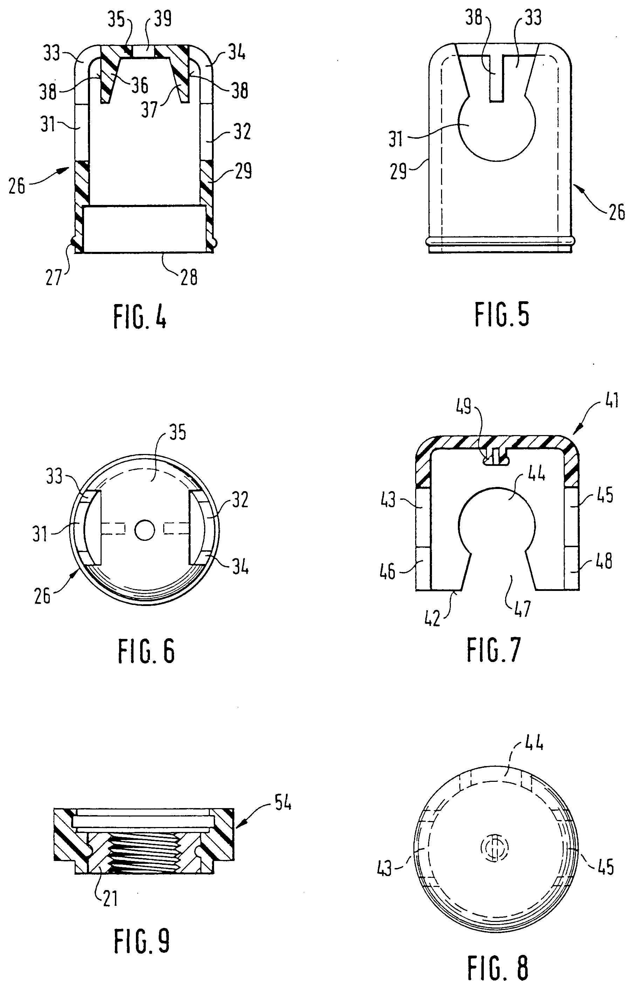

Ein Ausführungsbeispiel der Erfindung ist in der Zeichnung dargestellt und in der nachfolgenden Beschreibung näher erläutert. Es zeigen Figur 1 in vereinfachter Darstellung eine Mehrfachanordnung von mehreren pneumatischen Magnetventilen, von denen jedes Magnetventil eine erfindungsgemäße Einrichtung zum Sammeln und Weiterleiten von Abluft aufweist, Figur 2 einen Längsschnitt durch eine einzelne Einrichtung in vergrößertem Maßstab, Figur 3 eine Draufsicht auf die Einrichtung nach Figur 2, Figur 4 einen Längsschnitt durch eine becherförmige Abdeckkappe der Einrichtung nach Figur 2, Figur 5 eine Seitenansicht der Abdeckkappe nach Figur 4 und Figur 6 eine Draufsicht der Kappe nach Figur 4. Figur 7 zeigt einen Längsschnitt durch die Verschlußkappe der Einrichtung nach Figur 2 und Figur 8 eine Draufsicht auf die Verschlußkappe nach Figur 7 und Figur 9 eine Variante eines Halterings für die Einrichtung nach Figur 2.

Beschreibung des Ausführungsbeispiels

Die Figur 1 zeigt in vereinfachter Darstellung eine Mehrfachanordnung von vier untereinander baugleichen, pneumatischen Magnetventilen 10, die jeweils in an sich bekannter Weise aus einem 3/2-Wegeventil 11 und einem zugehörigen Magneten 12 bestehen. Jedes Magnetventil 10 hat einen mit P bezeichneten Zulaufanschluß 13, einen mit A bezeichneten Steueranschluß 14, sowie einen mit R bezeichneten Rücklaufanschluß 15. Am Rücklaufanschluß 15 jedes Magnetventils 10 ist eine erfindungsgemäße Einrichtung 16 zum Sammeln und Weiterleiten von Abluft gehäusefest angebaut. Die Einrichtungen 16 aller Magnetventile 10 sind über eine Sammelleitung 17 gemeinsam an einen Ölabscheider 18 angeschlossen.

Die Figur 2 zeigt nun die Einrichtung 16 im Längsschnitt und in vergrößertem Maßstab. Dabei ist die Einrichtung 16 mit Hilfe einer Schnappverbindung 19 an dem gehäusefesten Rücklaufanschluß 15 befestigt, wobei dieser R-Anschluß in an sich bekannter Weise als Rändelmuttel 21 ausgebildet ist; diese muß mit einem Einstich 24 versehen werden. Alternativ wird eine Einspritzmutter als Kunststoffspritzteil mit ausgebildeten Haltering 22 verwendet. Der Haltering 22 überragt die Rändelmutter 21 und weist in dem überragenden Abschnitt eine innenliegende Ringnut 25 auf, in die eine becherförmige Abdeckkappe 26 mit ihrem außenliegenden Ringwulst 27 einrastet. Dieser Ringwulst 27 ist nahe dem offenen Ende 28 der Abdeckkappe 26 ausgebildet, und bildet zusammen mit der Ringnut 25 im Haltering 22 die Schnappverbindung 19, wodurch die Abdeckkappe 26 relativ um ihre Längsachse verdrehbar am Rücklaufanschluß 15 gehalten wird.

Wie die Figuren 4 bis 6 näher zeigen, in denen die Abdeckkappe 26 als Einzelteil dargestellt ist, weist sie in einem zylindrischen Abschnitt 29 zwei diametral zueinander liegende Schlauchöffnungen 31, 32 auf, die jweils über einen zugehörigen Schlitz 33 bzw. 34 zu einem Boden 35 hin einseitig geöffnet sind. Vom Boden 35 ragen zwei als Anschläge dienende Stege 36, 37 in der Abdeckkappe 26 nach innen, deren Anschlagflächen 38 parallel zum zylindrischen Abschnitt 29 verlaufen und sich im Bereich der Schlitze 33 bzw. 34 bis in die Schlauchöffnungen 31, 32 hinein erstrecken. Im Boden 35 ist zentrisch ein Loch 39 angeordnet.

Auf die in Figur 2 innenliegende Abdeckkappe 26 ist von der Bodenseite 35 her eine hutförmige Verschlußkappe 41 aufgesteckt, wie sie als Einzelteil in Figur 7 und 8 näher dargestellt ist. Die Verschlußkappe 41 übergreift mit ihrem offenen Rand 42 die Schlauchöffnungen 31, 32 in der Abdeckkappe 26 und weist in einer radialen Ebene drei Schlauchöffnungen 43, 44, 45 auf, die jeweils zueinander um 90° versetzt liegen. Von jeder Schlauchöffnung 43 bis 45 führt ein zugeordneter Einführschlitz 46 bis 48 zum offenen Rand 42 hin. Am Boden der Verschlußkappe 41 ist ein Zapfen 49 angeordnet, mit dem die Verschlußkappe 41 in das Loch 39 der Abdeckkappe 26 eingeklipst wird. Die Verschlußkappe 41 ist daher bei fehlenden Schlauchleitungen gegenüber der Abdeckkappe 26 verdrehbar angeordnet. In der montierten Stellung der Verschlußkappe 41 liegen deren Schlauchöffnungen 43 bis 45 in der gleichen radialen Ebene wie die Schlauchöffnungen 31 und 32 in der Abdeckkappe 26.

Bei der in Figur 2 dargestellten Einrichtung 16 ist die Verschlußkappe 41 relativ zur Abdeckkappe 26 so geschaltet, daß ein erstes Schlauchstück 51 sowie ein zweites Schlauchstück 52 gemeinsam und gleichachsig zueinander an der Einrichtung 16 angeschlossen sind. Die beiden Schlauchstücke 51, 52 werden von den beiden Kappen 26, 41 fest und dicht gehalten, wobei ihre jeweilige Lage in der Längsrichtung durch die Anschlagflächen 38 bestimmt ist. Es kann sich somit durch den Rücklaufanschluß 15 abströmende Luft sowie auch über das erste Schlauchstücke 51 zuströmende Luft im Innenraum der Einrichtung 16 sammeln und über das zweite Schlauchstück 52 ungehindert abströmen.

Zur Montage der Schlauchstücke 51, 52 wird so vorgegangen, daß bei abgenommener Verschlußkappe 41 die Schlauchstücke 51, 52 mit ihren Enden durch die Schlitze 33, 34 in die Schlauchöffnungen 31 bzw 32 eingesetzt werden, wobei die Anschlagflächen 38 ihre axiale Lage festlegen. Anschließend wird die Verschlußkappe 41 übergestülpt, wobei die Einführungsschlitze 46 und 48 die beiden Schlauchstücke übergreifen und letztere schließlich in den Schlauchöffnungen 43, 45 zu liegen kommen. Wenn die Verschlußkappe 41 mit ihrem Zapfen 49 in ihrer Endlage in der Abdeckkappe 26 eingerastet ist, umschließt sie mit ihrem zylindrischen Bereich nahe ihrem Boden die Schlitze 33, 34 in der Abdeckkappe 26, so daß der Innenraum in der Abdeckkappe 26 nach außen hin abgesperrt ist.

Durch verdrehte Einbaulage der Verschlußkappe 41 relativ zur Abdeckkappe 26 kann die Verschlußkappe 41 auch so auf der Abdeckkappe 26 angeordnet werden, daß lediglich ein einziges Schlauchstück, zum Beispiel 51, mit der Einrichtung 16 in Verbindung steht. Für den geschilderten Fall wird die Verschlußkappe 41 so aufgesetzt, daß sich deren Schlauchöffnung 44 mit der Schlauchöffnung 31 in der Abdeckkappe 26 überdeckt, wobei die andere Schlauchöffnung 32 mit dem zugehörigen Schlitz 34 von dem geschlossenen, hülsenförmigen Abschnitt der Verschlußkappe 41 abgesperrt wird. Die Einrichtung 16 mit dem jeweils angeschlossenen Schlauchstücken läßt sich infolge der Ausbildung der Schnappverbindung 19 relativ zum Rücklaufanschluß 15 verdrehen. Zudem ist die Einrichtung 16 als Ganzes durch die Schnappverbindung 19 leicht demontierbar.

Die Figur 9 zeigt einen Längsschnitt durch einen anderen Haltering 54, bei dem der Haltering selbst unmittelbar an der Rändelmutter 21 des Rücklaufanschlusses 15 angespritzt ist.

Selbstverständlich sind an der gezeigten Einrichtung Änderungen möglich, ohne vom Gedanken der Erfindung abzuweichen. Die Einrichtung 16 läßt sich auch vorteilhaft so ausbilden, daß in ihrem Inneren zusätzlich ein an sich bekannter, kegelförmiger, eingeschraubter Schalldämpfer 55 aus Sintermetall untergebracht werden kann. Auch kann am Rücklaufanschluß anstelle der Rändelmutter z.B. eine Sechskantmutter verwendet werden.

## Patentansprüche

1. Einrichtung zum Sammeln und Weiterleiten von Abluft aus pneumatischen Bauelementen, insbesondere elektromagnetisch betätigten Ventilen, zum Anbau an einem Rücklauf-Anschluß eines Ventilgehäuses, dadurch gekennzeichnet, daß die Einrichtung (16) eine im wesentlichen becherförmige Abdeckkappe (26) aufweist, die an ihrem offenen Ende (28) Befestigungsmittel (27) zum Anbau am Ventilgehäuse aufweist und die in ihrem zylindrischen Bereich (29) wenigstens eine Schlauchöffnung (31, 32) aufweist, die über einen Schlitz (33, 34) zum Boden (35) der Abdeckkappe (26) hin einseitig offen ist und daß bodenseitig auf die Abdeckkappe (26) eine hutförmige Verschlußkappe (41) aufgesetzt ist, die mindestens eine der Schlauchöffnung (31, 32) entsprechende Bohrung (43, 44, 45) aufweist, welche über einen Einführschlitz (46, 47, 48) zum freien Rand (42) der Verschlußkappe (41) hin offen ist und welche Verschlußkappe (41) den Schlitz (33, 34) in der Abdeckkappe (26) abdeckt.

2.   Einrichtung nach Anspruch 1, dadurch gekennzeichnet, daß die Abdeckkappe (26) im zylindrischen Bereich (29) zwei diametral zueinanderliegende Schlauchöffnungen (31, 32) mit zugehörigen Schlitzen (33, 34) aufweist.

3.   Einrichtung nach Anspruch 1 oder 2, dadurch gekennzeichnet, daß die Verschlußkappe (41) drei, längs des Umfangs regelmäßig um 90° zueinander versetzte Bohrungen (43, 44, 45) mit zugehörigen Einführschlitzen (46, 47, 48) aufweist.

4.   Einrichtung nach einem oder mehreren der Ansprüche 1 bis 3, dadurch gekennzeichnet, daß in der Abdeckkappe (26) in den Bereich der Schlauchöffnungen (31, 32) ragende Anschläge (36, 37) angeordnet sind.

5.   Einrichtung nach Anspruch 4, dadurch gekennzeichnet, daß die Anschläge von am Boden (35) befestigten, in das Innere der Abdeckkappe (26) ragenden Stegen (36, 37) gebildet werden, bei denen insbesondere die Anschlagflächen (38, 39) parallel zur Mantelfläche der Abdeckkappe (26) im Bereich der jeweiligen Schlitze (33, 34) bis zum Boden (35) hin verlaufen.

6.   Einrichtung nach einem oder mehreren der Ansprüche 1 bis 5, dadurch gekennzeichnet, daß die Schlauchöffnungen (31, 32) und die Bohrungen (43 bis 45) in der gleichen radialen Ebene liegen und die Verschlußkappe (41) relativ zur Abdeckkappe (26) verdrehbar angeordnet ist.

7.   Einrichtung nach einem der Ansprüche 1 bis 6, dadurch gekennzeichnet, daß die Befestigungsmittel (27) Teil einer formschlüssigen Schnappverbindung (19) sind, die insbesondere einen auf der Mantelfläche der Abdeckkappe (26) nahe ihrem offenen Ende (28) verlaufenden Ringwulst (27) aufweist.

8.   Einrichtung nach Anspruch 7, dadurch gekennzeichnet, daß die Befestigungsmittel einen Haltering (22) aufweisen, der eine innenliegende, den Ringwulst (27) der Abdeckkappe (26) aufnehmende Ringnut (25) aufweist und der einen innenliegenden Ringwulst (33) zum Einklipsen auf einen gehäusefesten Rücklauf-Anschluß (21) aufweist.

9.   Einrichtung nach einem der Ansprüche 1 bis 8, dadurch gekennzeichnet, daß die Abdeck- und die Verschlußkappe (26, 41) aus Kunststoff bestehen.

10.   Einrichtung nach einem der Ansprüche 1 bis 9, dadurch gekennzeichnet, daß Abdeckkappe (26) und Verschlußkappe (41) durch eine Schnappverbindung (39, 49) in axialer Richtung formschlüssig miteinander verbunden sind.

FIG.1

16

17

15  R

12

11

10

18

10

13  P  A  14

FIG. 2

16

41

51

52

26

19

25

22

24

21

15  R

FIG. 3

41

22

FIG. 4

FIG.5

FIG. 6

FIG.7

FIG.9

FIG. 8

| | |
|---|---|
| Europäisches Patentamt | |

# EUROPÄISCHER RECHERCHENBERICHT

Nummer der Anmeldung

EP    92 10 2363

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 616 568 (HILTI)<br>* das ganze Dokument *<br>--- | 1,2,6 | F16L37/00<br>F16L3/10<br>F16L41/02 |
| A | DE-C-3 721 501 (DAIMLER-BENZ)<br>* das ganze Dokument *<br>--- | 1 | |
| A | DE-A-2 913 285 (WAVIN B.V.)<br>* Anspruch 1; Abbildungen 1-3 *<br>--- | 1 | |
| A | DE-A-3 630 891 (AEROQUIP)<br>* Anspruch 1; Abbildungen 1-3 *<br>--- | 1 | |
| A | US-A-4 112 944 (WILLIAMS)<br>* Spalte 1, Zeile 24 - Zeile 45; Abbildungen 1-9<br>*<br>--- | 1 | |
| A | FR-A-1 468 174 (GRA-TEC INC.)<br>* Anspruch 1; Abbildungen 1-6 *<br>----- | 1 | |
| | | | **RECHERCHIERTE SACHGEBIETE (Int. Cl.5)**<br><br>F16L<br>F15B |

Der vorliegende Recherchenbericht wurde für alle Patentansprüche erstellt

| Recherchenort | Abschlußdatum der Recherche | Prüfer |
|---|---|---|
| BERLIN | 08 MAI 1992 | THOMAS C. |